(19)

**Europäisches Patentamt**
**European Patent Office**
**Office européen des brevets**

(11) **EP 4 542 189 A1**

(12) **EUROPEAN PATENT APPLICATION**
published in accordance with Art. 153(4) EPC

(43) Date of publication:
**23.04.2025   Bulletin 2025/17**

(51) International Patent Classification (IPC):
**G01M 3/02** (2006.01)

(21) Application number: **23859832.0**

(52) Cooperative Patent Classification (CPC):
**G01M 3/02**

(22) Date of filing: **03.07.2023**

(86) International application number:
**PCT/JP2023/024643**

(87) International publication number:
**WO 2024/048062 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.08.2022   JP 2022136926**

(71) Applicant: **Mitsubishi Heavy Industries, Ltd.
Tokyo 100-8332 (JP)**

(72) Inventors:
• **IKEDA, Takashi**
  **Tokyo 100-8332 (JP)**

• **SUZUKI, Keita**
  **Tokyo 100-8332 (JP)**
• **ARAKAWA, Yoshiaki**
  **Tokyo 100-8332 (JP)**
• **KAMIHARA, Nobuyuki**
  **Tokyo 100-8332 (JP)**
• **INUI, Masayuki**
  **Tokyo 100-8332 (JP)**
• **SHIBUYA, Hidekazu**
  **Tokyo 100-8332 (JP)**
• **ISHIMOTO, Yoshitaka**
  **Yokohama-shi, Kanagawa 220-0012 (JP)**

(74) Representative: **Studio Torta S.p.A.
Via Viotti, 9
10121 Torino (IT)**

(54) **EMISSION AMOUNT ESTIMATION DEVICE, EMISSION AMOUNT ESTIMATION METHOD, AND PROGRAM**

(57)   This emission amount estimation device comprises: a detection unit detects a jet flow of leaking gas on the basis of a captured inspection image of an inspection object; an outlet diameter measurement unit that measures an outlet diameter indicating the size of a jet flow outlet of the inspection object on the basis of the inspection image; a speed calculation unit that calculates the flow speed of a potential core region of the jet flow on the basis of the outlet diameter and the flow speed of the jet flow; a concentration estimation unit that estimates a leakage concentration indication the concentration of the leaking gas, on the basis of the luminance value of the potential core region in the inspection image; and a gas concentration-luminance table establishing a relationship between the concentration of the gas and a luminance value of a captured image of the gas; and an emission amount estimation unit that estimates an emission amount of the gas on the basis of the volume of the jet flow and the leakage gas concentration.

FIG. 2

EMISSION AMOUNT ESTIMATION DEVICE — 10
11 PROCESSOR
110 — DETECTION UNIT
111 — OUTLET DIAMETER MEASUREMENT UNIT
112 — VELOCITY CALCULATION UNIT
113 — VOLUME CALCULATION UNIT
114 — CONCENTRATION ESTIMATION UNIT
115 — EMISSION AMOUNT ESTIMATION UNIT
12 — MEMORY
13 — STORAGE
14 — COMMUNICATION INTERFACE

## Description

Technical Field

The present disclosure relates to an emission amount estimation device, an emission amount estimation method, and a program.

This application claims priority to Japanese Patent Application No. 2022-136926, filed in Japan on August 30, 2022, the content of which is incorporated herein by reference.

Background Art

As a technique for detecting gas leakage, there is a method of mounting a gas detection unit such as an infrared camera that can detect a gas absorption wavelength (hereinafter, also referred to as a "specific wavelength") or a laser light absorption spectrometer on an unmanned flying object and inspecting gas leakage of a gas pipe from the sky (for example, refer to PTL 1).

In a case where gas leaks, the specific wavelength is absorbed at the leakage location. Therefore, for example, in a case where the gas detection unit is a camera, a black shadow indicating the leaking gas appears in the captured image. Since the amount of absorption at the specific wavelength changes depending on the gas concentration, the black shadow appears shading depending on the gas concentration. Therefore, by detecting the black shadow and analyzing the shading degree, it is possible to detect gas leakage and measure the gas concentration.

Citation List

Patent Literature

[PTL 1] Japanese Patent No. 6703756

Summary of Invention

Technical Problem

However, in the related art, since the visualization is performed by the specific wavelength absorption, it is difficult to distinguish whether the gas concentration is locally high or the height direction region where the gas is present is large (thick), particularly in a place where the specific wavelength absorption is large and appears black on the image. Therefore, there is a possibility that the amount of gas emitted from a gas leakage location, such as a gas pipe, cannot be accurately estimated.

An object of the present disclosure is to provide an emission amount estimation device, an emission amount estimation method, and a program capable of accurately estimating an emission amount of gas from an inspection target.

Solution to Problem

According to an aspect of the present disclosure, there is provided an emission amount estimation device that estimates an emission amount of gas leaking from an inspection target, the device including a detection unit that detects a jet of the gas leaking from the inspection target based on an inspection image in which the inspection target is imaged, an outlet diameter measurement unit that measures an outlet diameter indicating a size of a jet outlet of the inspection target based on the inspection image, a velocity calculation unit that calculates a flow velocity of the jet in a potential core region based on the inspection image, a volume calculation unit that calculates a volume of the jet based on the outlet diameter and a flow velocity of the jet, a concentration estimation unit that estimates a leakage gas concentration indicating a concentration of the leaked gas based on a brightness value of the potential core region in the inspection image and a gas concentration-brightness table that defines a relationship between the concentration of the gas and the brightness value of an image in which the gas is imaged, and an emission amount estimation unit that estimates the emission amount of the gas based on the volume of the jet and the leakage gas concentration.

According to an aspect of the present disclosure, there is provided an emission amount estimation method that estimates an emission amount of gas leaking from an inspection target, the method including: a step of detecting a jet of the gas leaking from the inspection target based on an inspection image in which the inspection target is imaged, a step of measuring an outlet diameter indicating a size of a jet outlet of the inspection target based on the inspection image, a step of calculating a flow velocity of the jet in a potential core region based on the inspection image, a step of calculating a volume of the jet based on the outlet diameter and a flow velocity of the jet, a step of estimating a leakage gas concentration indicating a concentration of the leaked gas based on a brightness value of the potential core region in the inspection image and a gas concentration-brightness table that defines a relationship between the concentration of the gas and the brightness value of an image in which the gas is imaged, and a step of estimating the emission amount of the gas based on the volume of the jet and the leakage gas concentration.

According to an aspect of the present disclosure, there is provided a program for causing an emission amount estimation device that estimates an emission amount of gas leaking from an inspection target to execute: a step of detecting a jet of the gas leaking from the inspection target based on an inspection image in which the inspection target is imaged, a step of measuring an outlet diameter indicating a size of a jet outlet of the inspection target based on the inspection image, a step of calculating a flow velocity of the jet in a potential core region based on the inspection image, a step of calculating a volume of the jet based on the outlet diameter and a flow velocity of the jet, a step of estimating a leakage gas concentration indicating a concentration of the leaked gas based on a brightness value of the potential core region in the inspection image and a gas concentration-brightness table that defines a relationship between the concentration of the gas and the brightness value of an image in which the gas is imaged, and a step of estimating the emission amount of the gas based on the volume of the jet and the leakage gas concentration.

Advantageous Effects of Invention

According to the above-described aspect, the emission amount of gas from the inspection target can be estimated with high accuracy.

Brief Description of Drawings

Fig. 1 is a schematic diagram showing an overall configuration of a monitoring system according to an embodiment.
Fig. 2 is a block diagram showing a functional configuration of an emission amount estimation device according to the embodiment.
Fig. 3 is a view showing an example of an inspection image according to the embodiment.
Fig. 4 is a first diagram for describing characteristics of a jet.
Fig. 5 is a second diagram for describing characteristics of a jet.
Fig. 6 is a flowchart showing an example of processing of the emission amount estimation device according to the embodiment.
Fig. 7 is a view showing an example of a gas concentration-brightness table according to the embodiment.
Fig. 8 is a view showing an example of a gas concentration test equipment according to the embodiment.

Description of Embodiments

(Overall Configuration of Emission Amount Estimation Device)

Hereinafter, embodiments will be described in detail with reference to the drawings.

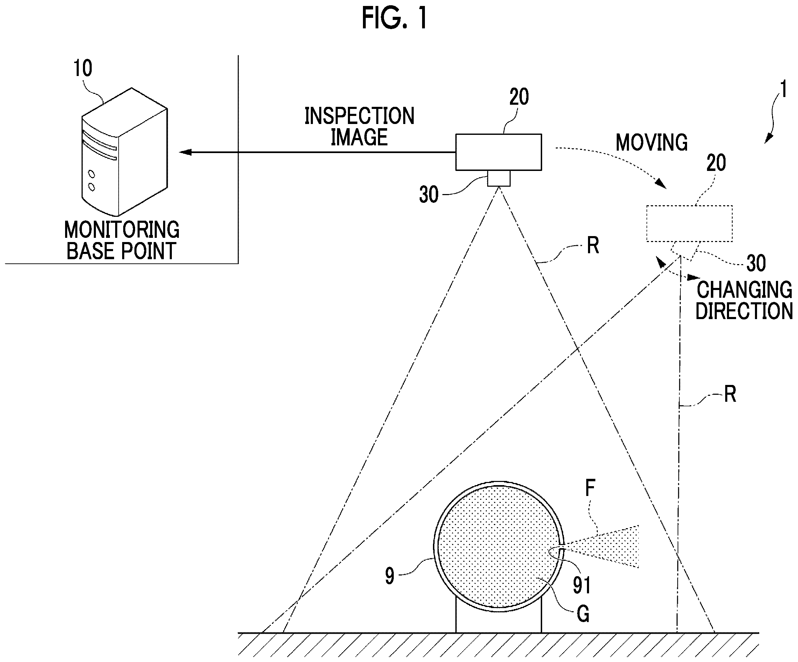

Fig. 1 is a schematic diagram showing an overall configuration of a monitoring system according to an embodiment.
The monitoring system 1 estimates an emission amount of leaking gas G in a case where the leakage of the gas G from the gas pipe 9 is detected. The gas pipe 9 is installed in a gas utilization site or the like and is a pipe for allowing gas G to flow therein. The gas pipe 9 is an example of an inspection target of an emission amount estimation device 10 according to the present embodiment. In another embodiment, for example, a storage tank of the gas G may be an inspection target.
As shown in Fig. 1, the monitoring system 1 includes the emission amount estimation device 10, a moving body 20, and a camera 30.
The moving body 20 is, for example, an unmanned aerial vehicle such as a drone, and moves within an installation area of the gas pipe 9 in accordance with a preset monitoring route or in accordance with an operation instruction of an operator.
The camera 30 is mounted on the moving body 20 and images the gas pipe 9. The camera 30 is, for example, an infrared camera capable of detecting a gas absorption wavelength (specific wavelength) of the gas G. In addition, the camera 30 can image each portion such as an upper surface and a side surface of the gas pipe 9 by changing the direction (imaging direction) of the imaging range R in accordance with the positional relationship between the moving body 20 and the gas pipe 9.
While the moving body 20 is moving in the installation area, the camera 30 constantly images the gas pipe 9. In addition, the moving body 20 sequentially transmits an image of the gas pipe 9 (hereinafter, also referred to as an inspection image) captured by the camera 30 to the emission amount estimation device 10.
The emission amount estimation device 10 is connected to the moving body 20 in a communicable manner. The emission amount estimation device 10 estimates the emission amount of the leaking gas G in a case where the leakage of the gas G from the gas pipe 9 is detected based on the inspection image of the gas pipe 9 acquired by the moving body 20.
Note that, although Fig. 1 shows an example in which the emission amount estimation device 10 is provided at a monitoring base point away from the installation area of the gas pipe 9, the present disclosure is not limited thereto. In another embodiment, the emission amount estimation device 10 may be incorporated into the moving body 20.

(Functional Configuration of Emission Amount Estimation Device)

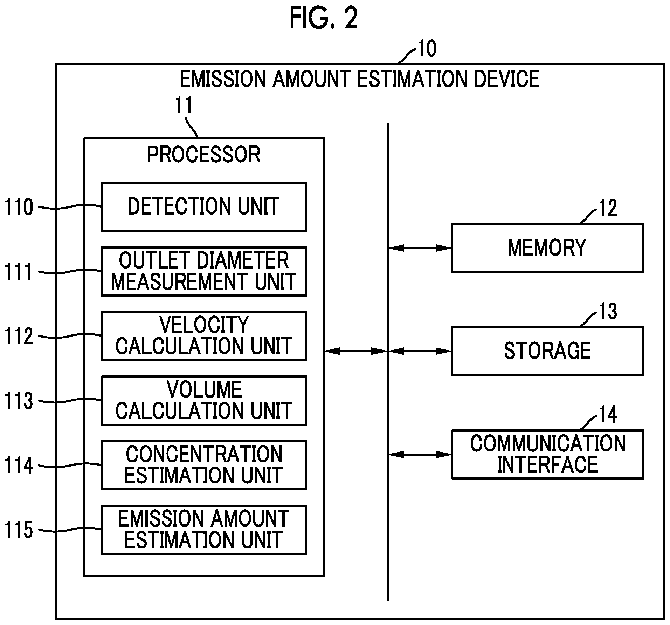

Fig. 2 is a block diagram showing a functional configuration of the emission amount estimation device according to the embodiment.
As shown in Fig. 2, the emission amount estimation device 10 includes a processor 11, a memory 12, a storage 13, and a communication interface 14.
The processor 11 operates in accordance with a predetermined program to exhibit functions as a detection unit 110, an outlet diameter measurement unit 111, a velocity calculation unit 112, a volume calculation unit 113, a concentration estimation unit 114, and an emission amount estimation unit 115.
The detection unit 110 acquires an inspection image in which the gas pipe 9 is imaged by the camera 30 through the moving body 20. The detection unit 110 detects the jet F of the gas G leaking from the gas pipe 9 based on the acquired inspection image.

The outlet diameter measurement unit 111 measures an outlet diameter indicating a size of a jet outlet 91 of the gas pipe 9 based on the inspection image.

The velocity calculation unit 112 calculates the flow velocity of the jet F based on the inspection image.

The volume calculation unit 113 calculates the volume of the jet F based on the outlet diameter of the jet outlet 91 and the flow velocity of the jet.

The concentration estimation unit 114 estimates the concentration (leakage gas concentration) of the gas G leaking from the gas pipe 9 based on the inspection image. Specifically, the concentration estimation unit 114 estimates the concentration of the gas G in the potential core region of the jet F in the inspection image from the flow velocity of the jet F. In addition, the concentration estimation unit 114 estimates the leakage gas concentration based on a table that defines a relationship between the concentration of the gas G and the brightness value of the image in which the gas G is captured, and the brightness value of the potential core region of the inspection image.

The emission amount estimation unit 115 estimates the emission amount of the gas G based on the volume of the jet F and the leakage gas concentration estimated by the concentration estimation unit 114.

The memory 12 has a memory region necessary for the operation of the processor 11.

The storage 13 is a so-called auxiliary storage device, and is, for example, a Hard Disk Drive (HDD), a Solid State Drive (SSD), or the like.

The communication interface 14 is an interface for transmitting and receiving various types of information to and from an external device (moving body 20).

A predetermined program executed by the processor 11 of the emission amount estimation device 10 is stored in a computer-readable recording medium. Further, examples of the computer-readable recording medium include a magnetic disk, a magneto-optical disk, a CD-ROM, a DVD-ROM, a semiconductor memory, and the like. Further, this computer program may be transferred to a computer through a communication line, and the computer receiving the transfer may execute the program. Further, this program may be for realizing a part of the above-described functions. Further, the program may be a program, so-called a difference file (difference program) that can implement the above-mentioned functions in combination with a program already recorded in a computer system.

(Characteristics of Jet)

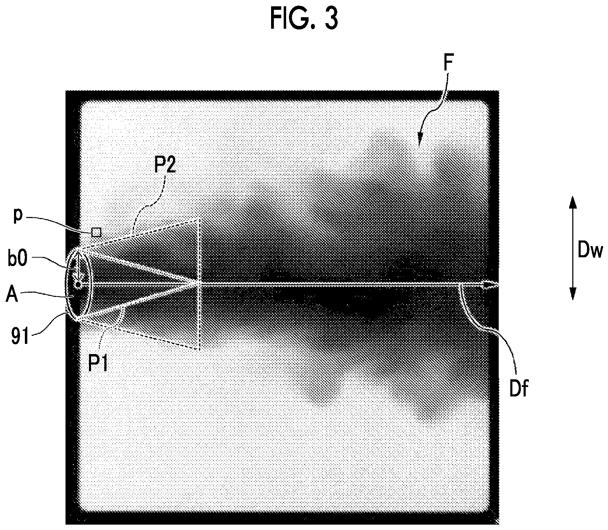

Fig. 3 is a view showing an example of the inspection image according to the embodiment.

For example, as shown in Fig. 1, it is assumed that the gas G leaks from the side surface of the gas pipe 9. The inspection image shown in Fig. 3 is an image in which the leakage location (jet outlet 91) and the jet F of the gas G are captured from above (from the position of the moving body 20 indicated by the solid line).

In the present embodiment, the camera 30 is an infrared camera capable of detecting a specific wavelength of the gas G, and in a case where the gas pipe 9 including the leakage location of the gas G is imaged, an inspection image in which the jet F of the gas G is reflected as a black shadow is obtained as shown in Fig. 3. In a case where the background is under the same radiation conditions, the black shadow of the inspection image is darker as the concentration of the gas G is higher or as the thickness of the gas G is larger. However, as described above, in a case where the shading degree of the black shadow is simply analyzed, it is difficult to distinguish whether the concentration of the gas G is high or the thickness of the gas G is large, and there is a possibility that the emission amount of the gas G cannot be accurately estimated. Therefore, the emission amount estimation device 10 according to the present embodiment estimates the emission amount of the gas G by using the characteristics of the jet F described below.

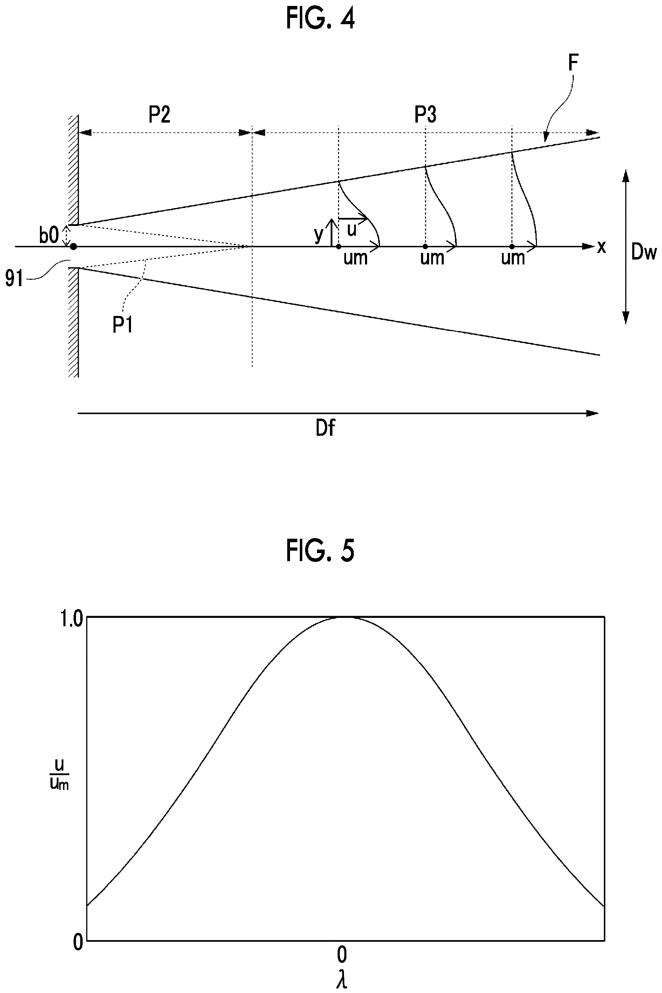

Fig. 4 is a first diagram for describing characteristics of the jet.

Fig. 5 is a second diagram for describing the characteristics of the jet.

As shown in Fig. 4, a jet F having a flow velocity equal to or higher than a certain flow velocity has a triangular region having momentum of a potential core P1. In a region including the potential core P1 of the jet F (hereinafter, also referred to as a potential core region P2), the influence of the disturbance is less likely to be received. In addition, the potential core region P2 without disturbance and the spread characteristics of the flow outside the potential core region P2 are formulated.

In the complete development region P3 on the downstream side of the potential core region P2, the maximum flow velocity um of the jet F uniformly decreases, but the decrease width of the maximum flow velocity um is a function of the outlet conditions (the outlet flow velocity U0, the reaching distance x, and the outlet diameter b0), and the reduction (velocity distribution) of the flow velocity u around the maximum flow velocity um is represented by a Gaussian distribution as shown in Fig. 5. The vertical axis of Fig. 5 is a value obtained by normalizing the flow velocity u with the maximum flow velocity um, and the horizontal axis represents $\lambda = y/x$. Therefore, the spread of the jet F of the potential core region P2 and the complete development region P3 in the width direction Dw (spread of the tail of the velocity distribution) can also be uniquely determined by the outlet condition under the ideal condition.

Apparent, the jet F fluctuates due to the disturbance, and the shape fluctuates non-steadily. In a case where the fluctuating portion is regarded as a region where the momentum is actively exchanged with the outside of the potential core region P2, it is considered that the influence of the disturbance on the outlet condition of the jet F is small. Therefore, by using the volume flow rate and the concentration of the gas G obtained from the outlet condition, it is possible to calculate the leakage flow rate of the gas with higher accuracy than the related art. Therefore, the emission amount estimation device 10 according to the present embodiment obtains the outlet condition of the jet F from the inspection image, and estimates the concentration and the emission amount of the leaking gas G based on the outlet condition.

(Processing Flow of Emission Amount Estimation Device)

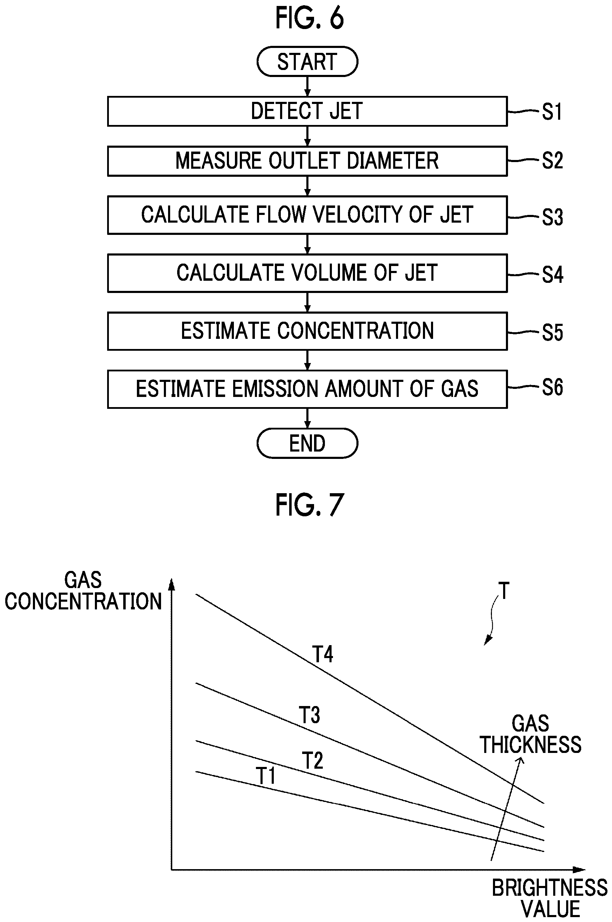

Fig. 6 is a flowchart showing an example of processing of the emission amount estimation device according to the embodiment.

Hereinafter, a flow of processing of estimating the concentration and the emission amount of the gas G leaked by the emission amount estimation device 10 will be described with reference to Fig. 6.

First, the detection unit 110 detects the jet F of the gas G leaking from the gas pipe 9 based on the inspection image (Fig. 3) acquired from the moving body 20 (Step S1). Since a technique of detecting the leakage (jet F) of the gas G from the inspection image is known, the detailed description thereof will be omitted.

Next, the outlet diameter measurement unit 111 measures the outlet diameter of the jet outlet 91, which is one of the outlet conditions, based on the inspection image (Step S2). In the present embodiment, as shown in Fig. 4, the shape of the jet outlet 91 is assumed to be circular, and the outlet diameter is assumed to be a radius $b_0$ of the jet outlet 91.

Next, the velocity calculation unit 112 calculates a flow velocity (outlet flow velocity) of the jet F, which is one of the outlet conditions (Step S3). The flow velocity of the gas G at the jet outlet 91 matches the flow velocity in the potential core P1. In addition, in the outer edge portion of the jet F of the potential core region P2, the flow velocity of the gas G is ideally a Gaussian distribution as shown in Fig. 5. In a case where the flow is further downstream than the potential core region P2, the outer edge portion is greatly disturbed due to the motion exchange of the gas G, but the flow velocity of the gas G in the outer edge portion should be close to a Gaussian distribution in the vicinity of the jet outlet 91. Therefore, the velocity calculation unit 112 estimates the flow velocity in the potential core from the flow velocity in the outer edge portion of the inspection image near the jet outlet 91 and estimates the flow velocity near the jet outlet 91. The reason for obtaining the flow velocity of the jet F in the outer edge portion is that the shape and brightness features of the jet F are easily captured and the velocity can be obtained relatively accurately due to the concentration difference with the surrounding fluid as compared with the central portion of the jet F.

The velocity calculation unit 112 calculates the flow velocity of the jet F in the outer edge portion in the vicinity of the jet outlet 91 by using a flow velocity measurement technique such as optical flow. For example, the velocity calculation unit 112 extracts the feature point p (pixel) of the outer edge portion of the jet F on the jet outlet 91 side (upstream side of the jetting direction Df) from any inspection image (first inspection image). For example, the feature point p is a point (so-called corner) at which the integrated value of the difference amount between the center of the region and the brightness in the pixel region is equal to or greater than a threshold value in a case where any pixel region is provided. In the potential core region P2, the influence of the disturbance is less likely to be received, and the diffusion amount at the outer edge portion (end portion in the width direction Dw) thereof is small. Therefore, it is assumed that the shape and the brightness of the feature point p extracted from the vicinity of the jet outlet 91 are maintained even in a case where the feature point p is moved to the position of the feature point p' after n frames (n is an optional value). Under such an assumption, the velocity calculation unit 112 extracts a pixel having the same brightness value as the feature point p from the inspection image (second inspection image) after n frames as a movement destination (feature point p') of the feature point p. The velocity calculation unit 112 calculates the flow velocity u of the jet F in the outer edge portion of the potential core region P2 from the difference in pixel coordinates of the feature points p and p' in two inspection images continuous in time series. The feature points p and p' may be a region consisting of a plurality of pixels, which indicates a characteristic shape of an outer edge portion of the jet F.

In other embodiments, for example, a laser irradiation device may be further mounted on the moving body 20, and the flow velocity of the jet F may be calculated using a particle image velocimetry (PIV) technique.

Next, the volume calculation unit 113 calculates the volume V of the jet F from the area A of the jet outlet 91 based on the radius $b_0$ and the flow velocity of the jet F (Step S4). For example, the volume V of the jet F is obtained by Formula (3) based on Prediction Formula (1) of the maximum flow velocity um at the reaching position x of the jet F and Prediction Formula (2) of the flow velocity u in the width direction Dw with respect to the maximum flow velocity um.

[Formula 1]

$$\frac{u_m}{U_0} = \frac{3.78}{\sqrt{\dfrac{x}{b_0}}} \quad \cdots (1)$$

[Formula 2]

$$\frac{u}{u_m} = \exp\left(-0.693\eta^2\right) \quad ...(2)$$

[Formula 3]

$$V = \pi U_0 \frac{3.78}{\sqrt{\dfrac{x}{b_0}}} \sqrt{\frac{\pi}{0.693}} \quad ...(3)$$

Next, the concentration estimation unit 114 estimates the leakage gas concentration (density) from the inspection image by using a gas concentration-brightness table T (Fig. 7) representing a relationship between the concentration of the gas G and the brightness value (Step S5).

Fig. 7 is a view showing an example of a gas concentration-brightness table according to the embodiment.

The vertical axis of Fig. 7 represents the gas concentration (the volume molar concentration, the mass molar concentration, or the mass% concentration), and the horizontal axis represents the brightness value. In addition, the gas concentration-brightness table T has tables T1, T2, T3, T4, ... different for each thickness of the gas.

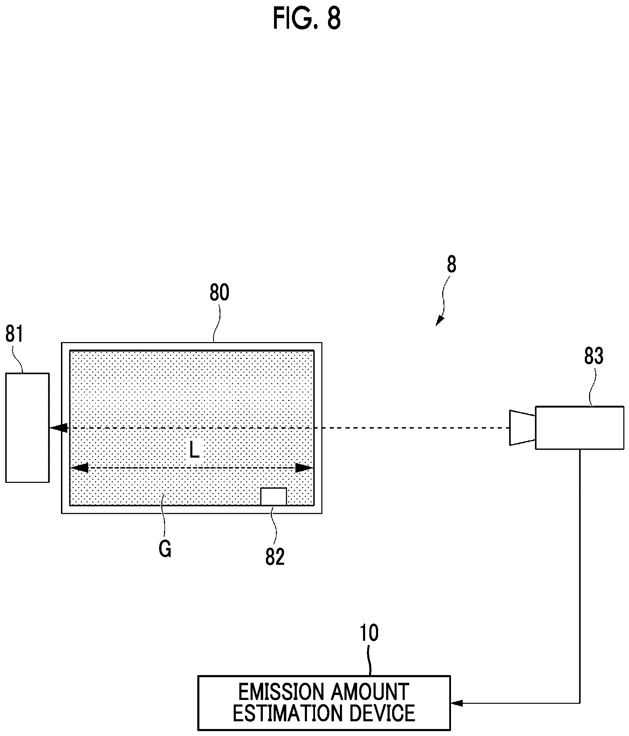

Fig. 8 is a view showing an example of a gas concentration test equipment according to the embodiment.

The gas concentration-brightness table T is created in advance using the test equipment 8 shown in Fig. 8. The test equipment 8 includes a test tube 80, a black body furnace 81, a concentration meter 82, and a camera 83. The camera 83 is the same camera as the camera 30, and is an infrared camera capable of detecting a specific wavelength of the gas G in the present embodiment.

The test tube 80 is a transparent test tube, and the gas G in which the gas concentration is changed in the pre-mixed state is put in the test tube 80. The test tube 80 is provided with an intake port and an exhaust port for the gas G, and the gas G can be taken in and exhausted while checking the concentration meter 82, so that the gas concentration in the test tube 80 can be changed. The camera 83 outputs an image obtained by imaging the gas G in the test tube 80 and the black body furnace 81 to the emission amount estimation device 10 whenever the gas concentration is changed.

The concentration estimation unit 114 of the emission amount estimation device 10 measures a brightness value of a region in which the black body furnace 81 is reflected from the image captured by the camera 83 for each gas concentration. The brightness value is a brightness value corresponding to the gas concentration of the gas G. The concentration estimation unit 114 creates a gas concentration-brightness table T by associating the gas concentration with the brightness value measured from the image, and records the gas concentration-brightness table T in the storage 13.

In addition, the concentration estimation unit 114 creates gas concentration-brightness tables T1, T2, T3, T4, ... (Fig. 7) for each thickness of the gas from the images captured by changing the length L (that is, the thickness of the gas G) of the test tube 80. Accordingly, it is possible to estimate the gas concentration according to the thickness of the gas G corresponding to the radius b0 of the jet outlet 91.

It is assumed that the gas G is in a pre-mixed state before the gas G becomes the jet F, and it is considered that the pre-mixed state is maintained in the potential core P1. Therefore, in Step S5, the concentration estimation unit 114 first measures the brightness value of the potential core region P2 of the jet F in the inspection image. In this case, the concentration estimation unit 114 calculates the average value of the brightness values of the pixels in a predetermined range on the center portion of the potential core region P2 in the width direction Dw and on the side close to the jet outlet 91 as the brightness value of the potential core region P2 in the inspection image. In addition, the size of the predetermined range may be changed according to the flow velocity of the jet F calculated in Step S3.

In addition, the concentration estimation unit 114 estimates the thickness of the gas G based on the radius b0 of the jet outlet 91 measured in Step S2, and reads out the gas concentration-brightness table T corresponding to the estimated thickness of the gas G. Then, the concentration estimation unit 114 estimates the concentration of the gas G based on the brightness value of the potential core region P2 measured from the inspection image and the gas concentration-brightness table T.

Next, the emission amount estimation unit 115 estimates the emission amount (mass flow rate) of the gas G by multiplying the volume V of the jet F calculated in Step S4 by the concentration of the gas G estimated in Step S5 (Step S6).

(Actions and Effects)

As described above, the emission amount estimation device 10 according to the present embodiment includes the outlet diameter measurement unit 111 that measures the outlet diameter (radius b0) of the jet outlet 91 based on the inspection image in which the gas pipe 9 is imaged, the velocity calculation unit 112 that calculates the flow velocity of the jet F in the potential core region P2 based on the inspection image, the volume calculation unit 113 that calculates the volume V of the jet F based on the radius b0 and the flow velocity of the jet F, the concentration estimation unit 114 that estimates the leakage gas concentration based on the brightness value of the potential core region P2 of the jet F in the inspection image and the gas concentration-brightness table T, and the emission amount estimation unit 115 that estimates the emission amount of the gas G based on the volume V of the jet F and the leakage gas concentration.

In this way, the emission amount estimation device 10 can accurately estimate the emission amount of the gas G by using the characteristics of the jet F.

For example, the gas concentration-brightness table T obtained by the test represents a relationship between the gas concentration and the brightness value in the pre-mixed state of the gas G. Therefore, in a case where the brightness of a region (for example, the complete development region P3) having a large diffusion amount among the black shadows of the gas G appearing in the inspection image is measured, the accurate leakage gas concentration cannot be measured. However, in the present embodiment, the concentration estimation unit 114 measures the brightness of the potential core region P2 including the potential core P1 in a state where the pre-mixed state is maintained, and compares the brightness with the gas concentration-brightness table T, so that the leakage gas concentration can be accurately estimated. In addition, since the volume can change depending on the temperature, the emission amount (mass flow rate) of the gas G is obtained from the volume and the leakage gas concentration, so that the accurate leakage amount of the gas G can be measured.

Further, the velocity calculation unit 112 can calculate the flow velocity of the jet F with high accuracy by calculating the flow velocity in the potential core region P2 having a relatively small diffusion amount than the downstream side (the complete development region P3).

In addition, the velocity calculation unit 112 calculates the flow velocity of the jet F in the potential core region P2 based on a difference between a position of the feature point p of the outer edge portion of the jet F on the jet outlet 91 side in any inspection image and a position of the feature point p' in the inspection image after any number of frames.

The velocity calculation unit 112 can more reliably obtain the flow velocity within the range of the potential core region P2 by calculating the flow velocity from the feature points p and p' on the jet outlet 91 side in this manner. In addition, it is possible to calculate the maximum flow velocity um of the jet F based on the velocity distribution from the flow velocity u of the jet F in the outer edge portion.

In addition, the gas concentration-brightness table T has a plurality of tables T1, T2, T3, T4, ... different from each other according to the thickness of the gas G, and the concentration estimation unit 114 estimates the thickness of the leaking gas G based on the radius b0 of the jet outlet 91 and estimates the leakage gas concentration based on the table corresponding to the estimated thickness of the gas G.

As described above, in the related art, it is difficult to distinguish whether the gas concentration is high or the gas thickness is large from the brightness value of the image, and there is a possibility that the gas concentration cannot be accurately estimated. On the other hand, in the present embodiment, the concentration estimation unit 114 can accurately estimate the leakage gas concentration by estimating the thickness of the gas G from the radius b0 of the jet outlet 91 and using the gas concentration-brightness table corresponding to the thickness of the gas G.

In addition, the concentration estimation unit 114 estimates the leakage gas concentration based on an average value of the brightness values of the pixels in a predetermined range in the potential core region P2. In addition, the concentration estimation unit 114 changes the size of the predetermined range according to the flow velocity of the jet F.

In this way, the concentration estimation unit 114 can appropriately measure the brightness of the region in which the potential core P1 is estimated to be present, according to the flow velocity. As described above, since the pre-mixed state is maintained in the potential core P1, the leakage gas concentration can be estimated with higher accuracy from the brightness of the potential core P1 and the gas concentration-brightness table T.

While one embodiment has been described in detail with reference to the drawings, the specific configuration is not limited to the above description, and various design changes and the like can be made. That is, in other embodiments, the procedures of processing described above may be changed as appropriate. In addition, some of the processing may be executed in parallel.

The above-described emission amount estimation device 10 according to the embodiment may be configured by a single computer, or may be configured by distributing the configuration of the emission amount estimation device 10 to a plurality of computers and functioning as the emission amount estimation device 10 by the plurality of computers cooperating with each other. In this case, some computers constituting the emission amount estimation device 10 may be mounted inside the moving body 20, and other computers may be provided outside the moving body 20.

In addition, in the above-described embodiment, the example in which the camera 30 is mounted on the moving body 20 has been described, but the present invention is not limited thereto. For example, in another embodiment, the camera 30 may be a fixed camera installed at predetermined intervals in the installation area of the gas pipe 9.

Further, in the above-described embodiment, the example in which the concentration estimation unit 114 of the emission amount estimation device 10 creates the gas concentration-brightness table T has been described, but the present disclosure is not limited thereto. In another embodiment, the gas concentration-brightness table T may be created by a computer other than the emission amount estimation device 10.

In addition, in the above-described embodiment, the example in which the plurality of gas concentration-brightness tables T are created for each thickness of the gas G has been described, but the present disclosure is not limited thereto. In another embodiment, for example, the distance between the test tube 80 and the camera 83 of the test equipment 8 may be changed, and the gas concentration-brightness table T for each distance may be further created. In this case, the concentration estimation unit 114 can more accurately estimate the gas concentration by switching and using the table according to the distance between the camera 30 and the gas pipe 9.

<Additional Notes>

The emission amount estimation device, the emission amount estimation method, and the program described in the above-described embodiment are understood as follows, for example.

(1) According to the first aspect, the emission amount estimation device 10 that estimates the emission amount of the gas G leaking from the inspection target 9 includes a detection unit 110 that detects the jet F of the gas G leaking from the inspection target 9 based on the inspection image in which the inspection target 9 is imaged, an outlet diameter measurement unit 111 that measures an outlet diameter indicating a size of the jet outlet 91 of the inspection target 9 based on the inspection image, the velocity calculation unit 112 that calculates the flow velocity of the jet F in the potential core region P2 based on the inspection image, the volume calculation unit 113 that calculates the volume of the jet F based on the outlet diameter and the flow velocity of the jet F, the concentration estimation unit 114 that estimates the leakage gas concentration indicating a concentration of the leaked gas G based on a brightness value of the potential core region P2 in the inspection image and a gas concentration-brightness table T that defines a relationship between the concentration of the gas G and the brightness value of an image in which the gas is imaged, and the emission amount estimation unit 115 that estimates the emission amount of the gas G based on the volume of the jet F and the leakage gas concentration.

In this way, the emission amount estimation device 10 can accurately estimate the emission amount of the gas G by using the characteristics of the jet F.

For example, the gas concentration-brightness table T obtained by the test represents a relationship between the gas concentration and the brightness value in the pre-mixed state of the gas G. Therefore, in a case where the brightness of a region (for example, the complete development region P3) having a large diffusion amount among the black shadows of the gas G appearing in the inspection image is measured, the accurate leakage gas concentration cannot be measured. However, in the present embodiment, the concentration estimation unit 114 measures the brightness of the potential core region P2 including the potential core P1 in a state where the pre-mixed state is maintained, and compares the brightness with the gas concentration-brightness table T, so that the leakage gas concentration can be accurately estimated. In addition, since the volume can change depending on the temperature, the emission amount (mass flow rate) of the gas G is obtained from the volume and the leakage gas concentration, so that the accurate leakage amount of the gas G can be measured.

Further, the velocity calculation unit 112 can calculate the flow velocity of the jet F with high accuracy by calculating the flow velocity in the potential core region P2 having a relatively small diffusion amount than the downstream side (the complete development region P3).

(2) According to the second aspect, in the emission amount estimation device 10 according to the first aspect, the velocity calculation unit 112 calculates the flow velocity of the jet F in the potential core region P2 based on a difference between a position of the feature point p of the outer edge portion of the jet F on the jet outlet 91 side in the first inspection image and a position of the feature point p' in the second inspection image which is the inspection image after any number of frames from the first inspection image among a plurality of the inspection images.

The velocity calculation unit 112 can more reliably obtain the flow velocity within the range of the potential core region P2 by calculating the flow velocity from the feature points p and p' on the jet outlet 91 side in this manner. In addition, it is possible to calculate the maximum flow velocity um of the jet F based on the velocity distribution from the flow velocity u of the jet F in the outer edge portion.

(3) According to the third aspect, in the emission amount estimation device 10 according to the first or second aspect, the gas concentration-brightness table T has a plurality of tables different from each other according to the thickness of the gas G, and the concentration estimation unit 114 estimates the thickness of the leaked gas G based on the outlet diameter and estimates the leakage gas concentration based on the table corresponding to the estimated thickness of the gas G.

In this way, the concentration estimation unit 114 can estimate the leakage gas concentration with high accuracy by estimating the thickness of the gas G from the radius $b_0$ of the jet outlet 91 and using the gas concentration-brightness table corresponding to the thickness of the gas G.

(4) According to the fourth aspect, in the emission amount estimation device 10 according to any one of the first to third aspects, the concentration estimation unit 114 estimates the leakage gas concentration based on the average value of the brightness values of the pixels in the predetermined range in the potential core region P2, and changes the size of the predetermined range in accordance with the flow velocity of the jet F.

In this way, the concentration estimation unit 114 can appropriately measure the brightness of the region in which the potential core P1 is estimated to be present, according to the flow velocity. Since the premixed state is maintained in the potential core P1, the leakage gas concentration can be estimated with higher accuracy from the brightness of the potential core P1 and the gas concentration-brightness table T.

(5) According to the fifth aspect, there is provided an emission amount estimation method that estimates the emission amount of the gas G leaking from the inspection target 9, the method comprising: a step of detecting the jet F of the gas G leaking from the inspection target based on the inspection image in which the inspection target 9 is imaged; a step of measuring the outlet diameter indicating the size of the jet outlet 91 of the inspection target based on the inspection image; a step of calculating the flow velocity of the jet F in the potential core region P2 based on the inspection image; a step of calculating the volume of the jet F based on the outlet diameter and the flow velocity of the jet F; a step of estimating the leakage gas concentration indicating the concentration of the leaked gas G based on the brightness value of the potential core region P2 in the inspection image and the gas concentration-brightness table T that defines a relationship between the concentration of the gas G and the brightness value of an image in which the gas G is imaged; and a step of estimating the emission amount of the gas G based on the volume of the jet F and the leakage gas concentration.

(6) According to the sixth aspect, there is provided a program for causing an emission amount estimation device 10 that estimates an emission amount of gas G leaking from an inspection target 9 to execute: a step of detecting the jet F of the gas G leaking from the inspection target 9 based on the inspection image in which the inspection target 9 is imaged; a step of measuring the outlet diameter indicating the size of the jet outlet 91 of the inspection target based on the inspection image; a step of calculating the flow velocity of the jet F in the potential core region P2 based on the inspection image; a step of calculating the volume of the jet F based on the outlet diameter and the flow velocity of the jet F; a step of estimating the leakage gas concentration indicating the concentration of the leaked gas G based on the brightness value of the potential core region P2 in the inspection image and the gas concentration-brightness table T that defines a relationship between the concentration of the gas G and the brightness value of an image in which the gas G is imaged; and a step of estimating the emission amount of the gas G based on the volume of the jet F and the leakage gas concentration.

Industrial Applicability

According to the above-described aspect, the emission amount of gas from the inspection target can be estimated with high accuracy.

Reference Signs List

1: monitoring system
9: gas pipe (inspection target)
91: jet outlet
10: emission amount estimation device
11: processor
110: detection unit
111: outlet diameter measurement unit
112: velocity calculation unit
113: volume calculation unit
114: concentration estimation unit
115: emission amount estimation unit
12: memory
13: storage
14: communication interface
20: moving body
30: camera
8: test equipment
80: test tube
81: black body furnace
82: concentration meter
83: camera
P1: potential core
P2: potential core region
P3: complete development region

**Claims**

1. An emission amount estimation device that estimates an emission amount of gas leaking from an inspection target, comprising:

a detection unit that detects a jet of the gas leaking from the inspection target based on an inspection image in which the inspection target is imaged;
an outlet diameter measurement unit that measures an outlet diameter indicating a size of a jet outlet of the inspection target based on the inspection image;
a velocity calculation unit that calculates a flow velocity of the jet in a potential core region based on the inspection image;
a volume calculation unit that calculates a volume of the jet based on the outlet diameter and a flow velocity of the jet;
a concentration estimation unit that estimates a leakage gas concentration indicating a concentration of the leaked gas based on a brightness value of the potential core region in the inspection image and a gas concentration-brightness table that defines a relationship between the concentration of the gas and the brightness value of an image in which the gas is imaged; and

an emission amount estimation unit that estimates the emission amount of the gas based on the volume of the jet and the leakage gas concentration.

2. The emission amount estimation device according to claim 1,
   wherein the velocity calculation unit calculates the flow velocity of the jet in the potential core region based on a difference between a position of a feature point of an outer edge portion of the jet on a jet outlet side of a first inspection image and a position of the feature point in a second inspection image which is an inspection image after any number of frames from the first inspection image among a plurality of the inspection images.

3. The emission amount estimation device according to claim 1,

   wherein the gas concentration-brightness table has a plurality of tables different from each other according to a thickness of the gas, and
   the concentration estimation unit estimates a thickness of the leaked gas based on the outlet diameter, and estimates the leakage gas concentration based on the table corresponding to the estimated thickness of the gas.

4. The emission amount estimation device according to any one of claims 1 to 3,
   wherein the concentration estimation unit estimates the leakage gas concentration based on an average value of brightness values of pixels in a predetermined range in the potential core region, and changes a size of the predetermined range in accordance with the flow velocity of the jet.

5. An emission amount estimation method that estimates an emission amount of gas leaking from an inspection target, the method comprising:

   a step of detecting a jet of the gas leaking from the inspection target based on an inspection image in which the inspection target is imaged; a step of measuring an outlet diameter indicating a size of a jet outlet of the inspection target based on the inspection image; a step of calculating a flow velocity of the jet in a potential core region based on the inspection image;

a step of calculating a volume of the jet based on the outlet diameter and a flow velocity of the jet; a step of estimating a leakage gas concentration indicating a concentration of the leaked gas based on a brightness value of the potential core region in the inspection image and a gas concentration-brightness table that defines a relationship between the concentration of the gas and the brightness value of an image in which the gas is imaged; and a step of estimating the emission amount of the gas based on the volume of the jet and the leakage gas concentration.

6. A program for causing an emission amount estimation device that estimates
   an emission amount of gas leaking from an inspection target to execute:

   a step of detecting a jet of the gas leaking from the inspection target based on an inspection image in which the inspection target is imaged; a step of measuring an outlet diameter indicating a size of a jet outlet of the inspection target based on the inspection image; a step of calculating a flow velocity of the jet in a potential core region based on the inspection image; a step of calculating a volume of the jet based on the outlet diameter and a flow velocity of the jet; a step of estimating a leakage gas concentration indicating a concentration of the leaked gas based on a brightness value of the potential core region in the inspection image and a gas concentration-brightness table that defines a relationship between the concentration of the gas and the brightness value of an image in which the gas is imaged; and a step of estimating the emission amount of the gas based on the volume of the jet and the leakage gas concentration.

# FIG. 1

EP 4 542 189 A1

## FIG. 2

EMISSION AMOUNT ESTIMATION DEVICE — 10

PROCESSOR — 11

110 — DETECTION UNIT

111 — OUTLET DIAMETER MEASUREMENT UNIT

112 — VELOCITY CALCULATION UNIT

113 — VOLUME CALCULATION UNIT

114 — CONCENTRATION ESTIMATION UNIT

115 — EMISSION AMOUNT ESTIMATION UNIT

MEMORY — 12

STORAGE — 13

COMMUNICATION INTERFACE — 14

FIG. 3

# FIG. 4

# FIG. 5

## FIG. 6

```
            START

    DETECT JET                      ─── S1

    MEASURE OUTLET DIAMETER         ─── S2

    CALCULATE FLOW VELOCITY OF JET  ─── S3

    CALCULATE VOLUME OF JET         ─── S4

    ESTIMATE CONCENTRATION          ─── S5

    ESTIMATE EMISSION AMOUNT OF GAS ─── S6

            END
```

## FIG. 7

# FIG. 8

## INTERNATIONAL SEARCH REPORT

| | International application No. |
|---|---|
| | **PCT/JP2023/024643** |

**A. CLASSIFICATION OF SUBJECT MATTER**

***G01M 3/02***(2006.01)i
FI: G01M3/02 M

According to International Patent Classification (IPC) or to both national classification and IPC

**B. FIELDS SEARCHED**

Minimum documentation searched (classification system followed by classification symbols)

G01M3/02; G01N21/3504

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6693609 B1 (KONICA MINOLTA INC) 13 May 2020 (2020-05-13)<br>paragraphs [0011]-[0075], fig. 1-8 | 1-6 |
| A | JP 2000-310577 A (TOSHIBA CORP) 07 November 2000 (2000-11-07)<br>paragraphs [0063]-[0083], fig. 5-7 | 1-6 |
| A | JP 6848965 B2 (KONICA MINOLTA INC) 24 March 2021 (2021-03-24)<br>paragraphs [0018]-[0073], fig. 1-17 | 1-6 |
| A | US 2020/0116583 A1 (FLIR SYSTEMS AB) 16 April 2020 (2020-04-16)<br>paragraphs [0059]-[0073], [0090]-[0092], fig. 6-8, 11 | 1-6 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024643**

| Patent document cited in search report | | | Publication date (day/month/year) | Patent family member(s) | | | Publication date (day/month/year) |
|---|---|---|---|---|---|---|---|
| JP | 6693609 | B1 | 13 May 2020 | US paragraphs [0029]-[0094], fig. 1-8 WO | 2022/0034742 2020/110411 | A1 A1 | |
| JP | 2000-310577 | A | 07 November 2000 | (Family: none) | | | |
| JP | 6848965 | B2 | 24 March 2021 | US paragraphs [0079]-[0153], fig. 1-17 WO | 2019/0113414 2017/179599 | A1 A1 | |
| US | 2020/0116583 | A1 | 16 April 2020 | WO CN | 2018/231735 111033231 | A1 A | |

Form PCT/ISA/210 (patent family annex) (January 2015)

**EP 4 542 189 A1**

**Patent documents cited in the description**

- JP 2022136926 A

- JP 6703756 B